# EUROPÄISCHE PATENTSCHRIFT

(11) **EP 2 357 451 B1**
(45) Veröffentlichungstag und Bekanntmachung des Hinweises auf die Patenterteilung: **16.11.2011**
(21) Anmeldenummer: 10153107.7
(22) Anmeldetag: 09.02.2010
(51) Int. Cl.: G01D 5/245, G01D 5/249, G01D 3/10

(54) **Messvorrichtung zur Absolutwertbestimmung von Längen oder Winkeln mit aus einzelnen Teilstücken zusammengesetzter aktiver Massverkörperung**
Measuring device for determining the absolute value of lengths or angles comprising an active measuring scale being composed of several adjacent parts
Dispositif de mesure destiné à la détermination de la valeur absolue de longueurs ou d'angles avec une echelle de mesure active composée de plusieurs parties adjacentes

(43) Veröffentlichungstag der Anmeldung: 17.08.2011
(73) Patentinhaber: SICK STEGMANN GmbH, 78166 Donaueschingen (DE)
(72) Erfinder: Siraky, Josef, 78166 Donaueschingen (DE)
(74) Vertreter: Hehl, Ulrich

(56) Entgegenhaltungen:
- EP-A1- 1 270 312
- EP-A1- 1 321 743
- DE-A1- 3 244 891
- US-A- 5 708 367

## Beschreibung

Die Erfindung betrifft eine Messvorrichtung und ein Verfahren zur Absolutwertbestimmung von Längen und Winkeln nach dem Oberbegriff von Anspruch 1 beziehungsweise 10.

Zur Längenmessung werden Längenmaßverkörperungen verwendet. Die Maßverkörperung wird bei inkrementaler Messung mit Teilungsperioden versehen, und ein Lesekopf zählt die Teilungsperioden bei seiner Bewegung zu einer Messposition. Man muss anfänglich eine Referenzfahrt ausführen, um die durch inkrementale Messung erhaltene Relativposition auch absolut gegenüber einem Bezugspunkt zu bestimmen.

Deshalb wird die Maßverkörperung alternativ mit einem absoluten Code versehen. Dadurch wird die anfängliche Kalbrierungsfahrt verzichtbar. Dafür sind aber mehrere Codespuren und entsprechend aufwändige Maßverkörperungen und Leseköpfe erforderlich. Je länger die Messstrecke sein soll, desto mächtiger muss die Codierung sein, und desto mehr Aufwand für zusätzliche Codespuren ist erforderlich.

Es ist weiterhin bekannt, eine Skala aus mehreren aneinandergereihten Magnetfeldsensoren zu bilden und die Lage eines als Lesekopf dienenden Dauermagneten durch Positionsmultiplexing zu bestimmen. Die Absolutcodierung für die Lage eines jeweiligen Magnetfeldsensors besteht aus mehreren zueinander beabstandeten Dauermagneten, wobei deren Abstände zueinander für jeden Magnetfeldsensor individuell variieren. Der Nachteil hieran ist, dass jeder Magnetfeldsensor schon bei der Herstellung< durch diese Beabstandungen eine feste Position innerhalb der Maßverkörperung zugewiesen bekommt. Dadurch ist die Flexibilität der Anordnung beschränkt. Würde man beispielsweise zwei gleichartig codierte Magnetfeldsensoren zusammenschalten, so ist die eindeutige Absolutcodierung gestört. Der Code muss somit ab Werk der zu messenden Länge angepasst werden, um jeweils die für die Anwendung kostengünstigste Maßverkörperung beziehungsweise den kostengünstigsten Lesekopf einsetzen zu können.

Die DE 101 17 193 A1 beschreibt ein Absolutwertmesssystem von Winkeln oder Wegen, bei dem der Maßstab aus mindestens zwei in gleicher Weise zur Absolutwerterfassung ausgebildeten Teilstrecken zusammengesetzt ist. Mit Hilfe einer zusätzlichen Absolutcodespur wird ausgelesen, auf welcher Teilstrecke sich der Abtastkopf befindet, woraus zusammen mit der Absolutposition innerhalb dieser Teilstrecke ein absoluter Messwert entsteht. Mit dieser Lösung wird keiner der oben genannten Nachteile überwunden, denn zum einen ist erforderlich, die zusätzliche Codespur auf dem Maßstab vorzusehen und im Abtastkopf auslesen zu können, zum anderen bestimmt die Mächtigkeit der zusätzlichen Abtastspur die maximale Anzahl von möglichen Teilstrecken des Maßstabs.

Die EP 1 270 312 A1 zeigt ein modulares Fördersystem mit unabhängiger Steuerung mehrerer beweglicher Elemente. Dabei werden mehrere Paletten nach dem Prinzip des Linearmotors unabhängig voneinander auf dem Fördersystem bewegt. Ein inkrementelles optisches Feedbacksystem bestimmt die jeweiligen Positionen der Paletten.

Aus der EP 1 321 743 A1 ist bekannt, zur Längenmessung einen Maßstab relativ zu der Position von mehreren Längensensoren zu bewegen. Jeder Längensensor kann eine Messstrecke bis hin zu der Länge des Maßstabs erfassen, und die Längensensoren sind zueinander um weniger als die Länge des Maßstabs beabstandet. Dadurch können auch Längen erfasst werden, die größer sind als die Länge des Maßstabs.

Es ist daher Aufgabe der Erfindung, ein einfach aufgebautes Absolutmesssystem anzugeben, welches zugleich möglichst unabhängig von den zu messenden Längen ist.

Diese Aufgabe wird durch eine Messvorrichtung zur Absolutwertbestimmung von Längen und Winkeln gemäß Anspruch 1 beziehungsweise ein entsprechendes Verfahren gemäß Anspruch 10 gelöst. Dabei geht die Lösung von dem Grundgedanken aus, eine Maßverkörperung modular aus absolut codierten, weitgehend autarken und aktiven Teilstücken zusammenzusetzen. Jedes Teilstück misst eine auf das Teilstück bezogene absolute Weginformation, wenn ein Lesekopf über dem Teilstück angeordnet ist. Mit Hilfe einer Information, wo sich das Teilstück innerhalb der Maßverkörperung befindet, kann daraus der gewünschte Messwert ermittelt werden.

Die Erfindung hat den Vorteil, dass ein sehr kostengünstiges, kompaktes und baukleines Messsystem entsteht, dessen Maßverkörperung wegen der modularen Teilstücke leicht zu lagern, zu verpacken und zu transportieren und einfach in Betrieb zu nehmen ist. Anders als im Stand der Technik muss keine aufwändige Absolutcodierung mit entsprechender Zahl von Codespuren über die gesamte Maßverkörperung definiert werden. Die abgespeicherte Positionsinformation lässt schon bei beispielsweise nur 32 Bit Speicherplatz mehrere Milliarden Teilstücke und damit praktisch jede beliebige Länge zu. Dazu muss lediglich die gewünschte Anzahl von generischen, in sich im Wesentlichen baugleichen Teilstücken bei gleichem Basissystem kaskadenartig aneinandergereiht werden, wobei bei Überschreitung gewisser Längen elektrische Verstärkungen in der Maßverkörperung vorzusehen sind. Trotz dieser Längenabmessungen sind hochgenaue Positionsbestimmungen im Mikrometerbereich und je nach Ausführungsform und Führungsgenauigkeit sogar darunter möglich. Die Messvorrichtung ist berührungslos und verschleißfrei sowie in hoher Schutzart ausführbar, etwa IP67.

Die Teilstücke sind zur aktiven Messung ausgebildet, erzeugen also je nach eingesetztem Messverfahren ein Magnetfeld oder ein elektrisches Feld. Durch den Anschluss für ein weiteres Teilstück entsteht eine Maßverkörperung als lineare, kaskadierbare Anordnung der gewünschten Anzahl von Teilstücken. Funktionsfähig ist aber auch eine Maßverkörperung mit nur einem Teilstück, sofern der Anschluss dann beispielsweise mit einem Endstück abgeschlossen wird. In aller Regel werden aber mehrere Teilstücke vorgesehen sein, die jeweils einen ersten Anschluss für ein vorgeordnetes und einen zweiten Anschluss für ein nachgeordnetes Teilstück aufweisen. Dabei ist jedes Teilstück mit den weiteren hier beschriebenen Merkmalen ausrüstbar, also einer Steuerung, einem Speicher und dergleichen. Das aktive Messprinzip ist in der Lage, auch mehrere Leseköpfe zu erkennen.

Der Anschluss sorgt zumindest für eine elektronische Verbindung der Teilstücke und enthält beispielsweise eine Versorgungsleitung oder eine Datenschnittstelle, wie eine serielle Schnittstelle oder eine Busschnittstelle. Der Anschluss umfasst bevorzugt zugleich eine mechanische Verbindung, um die Teilstücke stabil zu der Maßverkörperung zusammenzufügen.

Die Positionsinformation ist bevorzugt als Längenmaß abgespeichert. Sie entspricht dann den aufaddierten Längen aller Teilstücke zwischen dem jeweiligen Teilstück, in dem die Positionsinformation gespeichert ist, und einem Bezugspunkt. Anders ausgedrückt ist die Positionsinformation der Versatz oder Offset des Teilstücks gegenüber einem Nullpunkt der Maßverkörperung. Alternativ genügt aber auch eine abstrakte Information, etwa eine Nummerierung. Kennt dann etwa eine zentrale Hauptsteuerung die Reihenfolge und den Typ aller Teilstücke, so lässt sich daraus auf einfache Weise der Versatz als Längenmaß gegenüber dem Nullpunkt berechnen.

Die Maßverkörperung ist bevorzugt selbstkonfigurierend, indem die Steuerungseinheit dafür ausgebildet ist, die eigene Positionsinformation von einem angeschlossenen anderen Teilstück zu empfangen oder aus einer Positionsinformation des angeschlossenen anderen Teilstücks abzuleiten. Kettenartig fragt dabei jedes Teilstück ab, ob an seinem Anschluss ein weiteres Teilstück verbunden ist, und übergibt alle notwendigen Informationen nach unten in die Kette. Beispielsweise startet das erste Teilstück mit der Positionsinformation Null, und bei jedem Übergang auf ein nachgeordnetes Teilstück wird die Positionsinformation heraufgezählt. Alternativ wird erneut bei Null gestartet, aber jeweils um die Länge des Teilstücks heraufgezählt. So steht jedem Teilstück nach Abschluss der Selbstkonfiguration sofort der Abstand zu einem Nullpunkt der Maßverkörperung zur Verfügung. Dabei werden noch bevorzugter zugleich Adressen für die Kommunikation vergeben. Die Kommunikationsadresse und die Positionsinformation können zueinander identisch oder auseinander ableitbar sein.

Der Lesekopf ist dafür ausgebildet, an einem Übergang zwischen zwei Teilstücken je einen Messwert beider Teilstücke zu erzeugen, so dass aus der Differenz der beiden Messwerte ein Korrekturmaß für den Übergang ableitbar ist. Beim Aneinanderreihen der Teilstücke entsteht durch den nicht vermeidbaren, von Umgebungsbedingungen wie Auflage oder Temperatur abhängigen Spalt ein Fehler, der auf diese Weise kompensiert wird. Das Korrekturmaß wird in einer Weiterbildung allen bezüglich des Nullpunkts nachgeordneten Teilstücken mitgeteilt, damit auch diese Teilstücke sich entsprechend korrigieren.

Der Lesekopf ist dafür so lang ausgebildet, dass an einem Übergang seine Position gegenüber beiden Teilstücken messbar ist, und hat dafür zwei effektive Messzonen für jedes der dem Übergang benachbarten Teilzonen. Diese Teilzonen können physikalisch einheitlich und schlicht darüber definiert sein, welche Signale von dem aktiven Teilstück sie erreichen, oder auch dediziert als voneinander getrennte Teilzonen ausgebildet sein. Der Lesekopf bildet auf diese Weise praktisch selbst eine Maßverkörperung, welche die Erstreckung des Übergangs zwischen zwei Teilstücken ausmisst.

Der Lesekopf ist bevorzugt aktiv und erzeugt ein Feld, welches mit einem von der Maßverkörperung erzeugten Feld in Wechselwirkung tritt. Ein aktiver Lesekopf kann selbst die verschiedenen Kompensationen und Kalibrierungen vornehmen und durch das selbst erzeugte Feld robust messen. Alternativ ist der Lesekopf passiv und modifiziert ein von der Maßverkörperung erzeugtes Feld oder reflektiert das Feld zu der Maßverkörperung. Ein solcher Lesekopf hat zwar nicht die Vorteile des aktiven Lesekopfes, ist dafür aber besonders kostengünstig und unempfindlich.

Die Steuerungseinheit ist bevorzugt dafür ausgebildet, an jeder Position des Teilstücks ein Feld zu erzeugen, um auszuwerten, ob und an welcher Position sich ein Lesekopf über dem Teilstück befindet, wobei das Ergebnis der Auswertung über den Anschluss ausgebbar ist. Jedes Teilstück führt so selbständig eine Messung aus und übergibt anstelle von Rohdaten unmittelbar einen Messwert, der leicht weiterverarbeitbar ist und keinerlei proprietäre elektrische Schnittstellen erfordert.

In dem Speicherelement ist bevorzugt eine Abweichung der eigenen Positionsmessung des Teilstücks von einer Referenz abgespeichert, um das Teilstück zu kalibrieren. Somit werden herstellungsbedingte Variationen der Länge von Teilstücken millimetergenau, mikrometergenau oder noch genauer berücksichtigt. Jedes Teilstück ist damit in sich entsprechend der Messanforderungen genau kalibriert und abgeglichen.

Die Maßverkörperung weist für eine Winkelmessung bevorzugt gekrümmte Teilstücke auf. Auf diese Weise entsteht ein Drehgeber, im Gegensatz zu einem Längengeber bei langgestreckten, geraden Teilstücken. Das Messprinzip funktioniert in beiden Fällen gleichermaßen, da auch ein Winkel letztlich eine mit dem Radius skalierte Länge im Bogenmaß ist. Obwohl auch andere Formen denkbar sind, bilden die gekrümmten Teilstücke bevorzugt einen Teilsektor eines Kreises. Die sequentielle Anordnung der Teilstücke ist dann zyklisch, das letzte Teilstück schließt sich also wieder an das erste Teilstück an.

Sofern die Steuerungseinheit abspeichert, wie oft und aus welcher Richtung ein bestimmter Lesekopf ein Teilstück passiert, lassen sich auch Umdrehungszahlen beziehungsweise Winkel größer als Vielfache von 360° absolut bestimmen.

Noch bevorzugter sind die Teilstücke zu unterschiedlichen Krümmungsradien verbiegbar, beispielsweise indem das Gehäuse oder der Träger eines Teilstücks aus einem Elastomer besteht. Damit wird der Radius des aus den Teilstücken zusammensetzbaren Kreises zumindest in gewissen Grenzen und bei nicht allzu hohen Genauigkeitsanforderungen einstellbar.

In einer bevorzugten Weiterbildung ist eine mit der Maßverkörperung elektrisch verbundene Hauptsteuerung vorgesehen, welche mit dem Anfang und dem Ende der sequentiellen Anordnung, insbesondere auch dem aktiv ausgebildeten Lesekopf verbunden sind. Die Hauptsteuerung ist beispielsweise der Versorgungsknoten für eine Versorgungsspannung und Versorgungsleistung der Messvorrichtung, der Kommunikationsmaster sowie die Schnittstelle zu einer der Messvorrichtung übergeordneten Steuerung, und sie startet und koordiniert die Konfigurations- und Kalibrierungsmodi. Die Hauptsteuerung kann mit den Steuerungseinheiten der Teilstücke zusammenarbeiten. Soweit nicht anders beschrieben, können Funktionen der Hauptsteuerung in die Steuerungseinheiten aller Teilstücke oder in bestimmte Steuerungseinheiten dedizierter, besonderer Teilstücke und insbesondere in ein Anfangsstück und/oder ein Endstück verlegt werden und umgekehrt.

Vorteilhafterweise ist ein Anfangsstück am Anfang und ein Endstück am Ende der sequentiellen Anordnung vorgesehen, wobei insbesondere die Hauptsteuerung zumindest teilweise in dem Anfangsstück oder dem Endstück integriert ist. Anfangsstück und/oder Endstück können zugleich als Teilstück ausgebildet sein, d.h. Teil der eigentlichen Maßverkörperung mit absoluten Messteilungen sein. Alternativ sind Anfangsstück und/oder Endstück lediglich einfache Abschlüsse, damit die Anschlüsse der Teilstücke an den Enden der sequentiellen Anordnung nicht frei bleiben, beispielsweise um einen Kommunikations- und Versorgungskreis zu schließen.

Maßverkörperung und Lesekopf sind bevorzugt für eine induktive, kapazitive oder magnetische Messung von Längen oder Winkeln ausgebildet. Die Maßverkörperung hat entsprechende aktive Codespuren mit Spulen und ähnlichen Schaltungselementen, deren elektrisches oder magnetisches Feld mit einem passenden Gegenstück in dem Lesekopf wechselwirkt. Besonders vorteilhaft ist eine kapazitive Messvorrichtung, weil deren Wechselwirkung blind gegen magnetische Felder ist und sich deshalb besonders gut für direkt angetriebene Linearmotoren eignet, in denen beispielsweise ein magnetisches Messsystem gestört würde.

Das erfindungsgemäße Verfahren kann auf ähnliche Weise durch weitere Merkmale ausgestaltet werden und zeigt dabei ähnliche Vorteile. Derartige weitere Merkmale sind beispielhaft, aber nicht abschließend, in den sich an den Vorrichtungsanspruch anschließenden Unteransprüchen beschrieben.

Die Maßverkörperung konfiguriert sich bevorzugt selbst, indem sequentiell jedes Teilstück, beginnend mit einem ersten Teilstück, sich in einem Selbstkonfigurationsmodus eine Positionsinformation zuweist oder eine Positionsinformation zugewiesen bekommt und anschließend ein nachgeordnetes Teilstück in den Selbstkonfigurationsmodus versetzt. Diese Selbstkonfiguration erfolgt beispielsweise beim Einschalten. Gibt es kein nachgeordnetes Teilstück, ist die Selbstkonfiguration abgeschlossen.

Es wird dann, wenn sich der Lesekopf an einem Übergang zwischen zwei Teilstücken befindet, je ein Messwert beider Teilstücke erzeugt und aus der Differenz der beiden Messwerte ein Korrekturmaß für den Übergang abgeleitet, wobei insbesondere die Positionsinformation eines der beiden Teilstücke um das Korrekturmaß kompensiert wird. Der Korrekturwert kann dann, wenn die Positionsinformation ein Längenmaß ist, unmittelbar addiert bzw. subtrahiert werden. Ansonsten wird der Korrekturwert zusammen mit der Positionsinformation abgespeichert, um später bei der Berechnung von Messwerten berücksichtigt zu werden.

Die Maßverkörperung wird vorteilhafterweise kalibriert, indem jedes Teilstück in sich Abweichungen zu einem Referenzmaß speichert, ein Nullpunkt für die Maßverkörperung, insbesondere bei einem der Leseköpfe, festgelegt wird und Abstände an einem Übergang zwischen zwei Teilstücken bei der Bewegung des Lesekopfes über den Übergang auf den Nullpunkt hin korrigiert werden. Die Kalibrierung umfasst somit drei Schritte, wobei auch nur ein einzelner dieser Schritte ausgeführt werden kann und zumindest zu einer Teilkalibrierung führt. Zunächst werden die Teilstücke in sich gegenüber einer Referenz, beispielsweise einem Laserinterferometer abgeglichen. Dann wird durch den Anwender ein Nullpunkt beziehungsweise ein Bezugspunkt auf der Maßverkörperung gewählt. Der Nullpunkt kann auch auf den Anfang, das Ende oder einen anderen Punkt der Maßverkörperung voreingestellt werden.

Schließlich werden auch die wegen mechanischer Toleranzen unvermeidlichen, in ihrer Ausdehnung variablen Lücken an den Übergängen zwischen jeweils zwei Teilstücken kalibriert. Dies ist immer dann möglich, wenn sich ein Lesekopf über einem Übergang befindet. Eine vollständige Kalibrierung wird also durch eine anfängliche Fahrt über die gesamte Maßverkörperung erzielt. Alternativ ist denkbar, mit einem noch nicht vollständig kalibrierten System zu arbeiten, welches für die Übergänge Erwartungswerte setzt und diese dynamisch immer dann korrigiert, wenn ein Lesekopf den Übergang passiert. Solange nämlich nur ein Lesekopf vorhanden ist und dieser nicht springt, somit kontinuierlich auf der Maßverkörperung verfahren wird, ist ein noch nicht kalibrierter Messort ohnehin nicht erreichbar. Die Erwartungswerte sind somit nur für mehrere Leseköpfe oder diskontinuierliche Bewegungen relevant.

Vorteilhafterweise wird zu einer anfänglichen Bestimmung der Position von Leseköpfen jeder Ort der Maßverkörperung durch Erzeugung eines lokalen Feldes mittels Positionsmultiplexing darauf überprüft, ob ein Lesekopf vorhanden ist, wobei anschließend im Betrieb jeweils nur in der Umgebung eines Lesekopfes ein lokales Feld erzeugt wird. Dazu wird mittels Positionsmultiplexing nacheinander jedes Teilstück und jede Position innerhalb eines Teilstücks stückweise aktiviert, bis sich an einer Stelle ein Lesekopf meldet beziehungsweise ein Lesekopf erkannt wird. Durch vollständiges Absuchen der Maßverkörperung werden auch mehrere Leseköpfe sicher gefunden. Der Aufwand für das Positionsmultiplexing ist im weiteren Betrieb nicht mehr erforderlich, da mit dem Anfangswissen über die Lesekopfpositionen gezielt nur noch deren Umgebungen ausgemessen werden.

Die Erfindung wird nachstehend auch hinsichtlich weiterer Vorteile und Merkmale unter Bezugnahme auf die beigefügte Zeichnung anhand von Ausführungsbeispielen erläutert. Die Figuren der Zeichnung zeigen in:
- Fig. 1: eine Blockdarstellung einer erfindungsgemäßen Messvorrichtung mit mo- dular aus Teilstücken zusammengesetzter Maßverkörperung;
- Fig. 2: eine schematische dreidimensionale Außenansicht eines Teilstücks gemäß Fig. 1;
- Fig. 3: eine schematische Schnittdarstellung des Teilstücks gemäß Fig. 2;
- Fig. 4: ein Blockschaltbild des Teilstücks gemäß Fig. 2;
- Fig. 5: eine schematische Schnittdarstellung entsprechend Figur 3 des Übergangs zweier Teilstücke zur Erläuterung einer Kompensation des dort auftreten- den Fehlers;
- Fig. 6a: eine schematische dreidimensionale Außenansicht eines gekrümmten Teil- stücks für eine Messvorrichtung zur Bestimmung von Winkeln;
- Fig. 6b: eine schematische Schnittdarstellung zur Erläuterung der Zusammenset- zung von Teilstücken gemäß Figur 6b zu einem Kreis;
- Fig. 7: eine kommentierte Schnittdarstellung einer erfindungsgemäßen Maßver- körperung zur Erläuterung von gespeicherten Positionsinformationen und der Selbstkonfiguration;
- Fig. 8: eine kommentierte Schnittdarstellung einer erfindungsgemäßen Maßver- körperung zur Erläuterung der Wahl eines Nullpunktes;
- Fig. 9: eine kommentierte Schnittdarstellung einer erfindungsgemäßen Maßver- körperung zur Erläuterung der Kompensation von an Übergängen zweier Teilstücke auftretenden Fehlern; und
- Fig. 10: eine kommentierte Schnittdarstellung einer erfindungsgemäßen Maßver- körperung zur Erläuterung des anfänglichen Positionsmultiplexings zur La- gebestimmung der Leseköpfe.

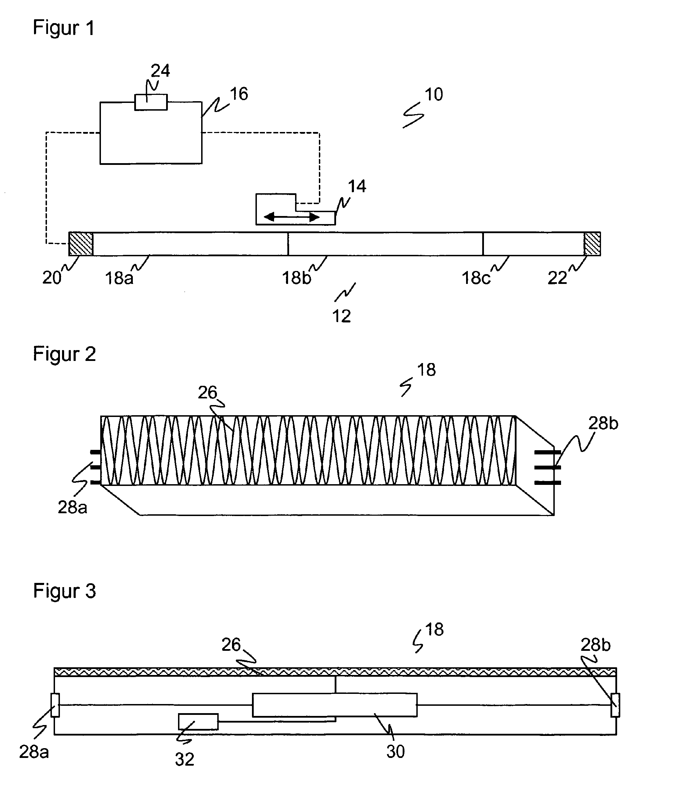

Figur 1 zeigt eine Blockdarstellung einer erfindungsgemäßen Messvorrichtung 10, die eine Maßverkörperung 12, einen längs der Maßverkörperung 12 verschieblichen Lesekopf 14 sowie eine Hauptsteuerung 16 aufweist. Die Maßverkörperung 12 ist aus einer Vielzahl von modularen Teilstücken 18a-c in einer sequentiellen Anordnung mit einem Anfangsstück 20 und einem Endstück 22 zusammengesetzt. Das Anfangsstück 20 und der Lesekopf 14 sind jeweils mit der Hauptsteuerung 16 verbunden, wobei alternativ oder zusätzlich auch Anfangsstück 20 und Lesekopf 14 untereinander verbunden sein können. Die Hauptsteuerung 16 weist eine Schnittstelle 24 auf, beispielsweise eine Hiperface-Schnittstelle, um die Messvorrichtung 10 an eine übergeordnete Steuerung anzuschließen.

Die Messvorrichtung 10 arbeitet erfindungsgemäß mit einem beliebigen Messprinzip, beispielsweise magnetisch, induktiv oder kapazitiv. Dabei erzeugt die Maßverkörperung 12 als aktive Skala ein lokales Feld, welches mit dem Lesekopf 14 in Wechselwirkung tritt und somit eine Positionsbestimmung des Lesekopfes 14 ermöglicht. Derartige Messverfahren sind dem Fachmann beispielsweise als induktive, magnetische oder kapazitive Messungen an sich bekannt. Alternativ zu dem dargestellten aktiven Lesekopf 14 ist auch ein passiver Lesekopf einsetzbar, welche beispielsweise als Dauermagnet oder als Dielektrikum ausgebildet ist und das von der Maßverkörperung erzeugte Feld in passiver Weise modifiziert oder reflektiert.

Figur 2 zeigt eine schematische dreidimensionale Außenansicht eines Teilstücks 18 der Maßverkörperung 10. Hier wie im Folgenden bezeichnen gleiche Bezugszeichen die gleichen Merkmale. Auf der dem Lesekopf 14 zugewandten Oberseite befindet sich eine Codierung 26 zur absoluten Positionsbestimmung, die hier zur anschaulichen Darstellung als Sinus- und Cosinusspuren ausgebildet sind. In der praktischen Umsetzung wird eine beliebige Codierung gewählt, beispielsweise als Kupferspuren auf einer Leiterplatte.

Zu beiden Seiten des Teilstücks 18 sind Anschlüsse 28a-b vorgesehen, mit denen eine prinzipiell beliebige Anzahl von Teilstücken 18 zu einer Maßverkörperung 12 kaskadierend zusammengesetzt werden können. Zusätzlich können mechanische Verbindungen, etwa durch integrierte Schrauben oder separate Verbindungselemente vorgesehen sein.

Jedes Teilstück 18 weist eine Standardlänge von beispielsweise 64mm, 128mm, 256mm, 512mm oder 1024mm auf. Im Querschnitt sind kleine Abmessungen von beispielsweise nur 10mm x 12mm und damit ein entsprechend leichter Lesekopf 14 möglich. Die Materialien für das Gehäuse der Teilstücke 18 sind nicht beschränkt, beispielsweise sind Kunststoffe insbesondere im Spritzgussverfahren, Aluminium oder rostfreier Stahl denkbar.

Figur 3 zeigt das Teilstück 18 als Blockschaltbild. Eine Steuerungseinheit ist mit der Leiterplatte 26 der aktiven Codierung sowie zu beiden Seiten mit den Anschlüssen 28a-b für weitere Teilstücke 18a-c verbunden. Außerdem ist ein bevorzugt nichtflüchtiger, beispielsweise als EEPROM ausgebildeter Speicher 32 vorgesehen, auf den die Steuerungseinheit 30 zugreift.

Jedes Teilstück 18 ist vorab in sich mit Hilfe einer Referenz, etwa durch ein Laserinterferometer kalibriert. Dabei werden Abweichungen der Solllänge des Teilstücks 18 und seiner Messteilungen von der lstlänge in dem Speicher 32 abgelegt, so dass die ausgegebenen Messwerte eine Genauigkeit von bis zu 1µm oder sogar darunter erreichen.

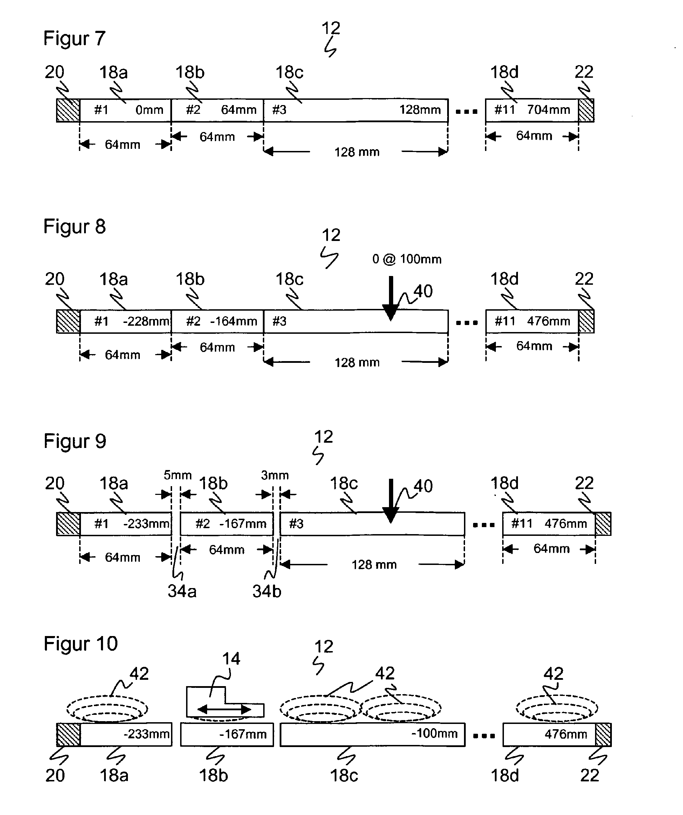

In dem Speicher 32 wird außerdem eine Adresse für die Kommunikation innerhalb der Messvorrichtung 10 gespeichert. Weiterhin wird in dem Speicher 32 eine Positionsinformation abgelegt, welche die Position des Teilstücks innerhalb der sequentiellen Anordnung der Teilstücke 18a-c der Maßverkörperung 12 codiert. Dies wird im einzelnen anhand der Figuren 7 bis 10 weiter unten näher erläutert.

Die Steuerung 30 ist in der Lage, selbständig die Position eines Lesekopfes 14 auf der Maßverkörperung 12 zu bestimmen, und zwar zunächst innerhalb des Teilstücks 18 absolut und nicht lediglich inkremental, und diesen Messwert über die Schnittstellen 28a-b auszugeben. Das Teilstück 18 hat somit die Funktionalität eines autarken Gebers. Die zunächst auf das Teilstück 18 bezogene Absolutposition wird durch weitere, unten noch erläuterte Maßnahmen in eine Absolutposition bezüglich der gesamten Maßverkörperung umgerechnet.

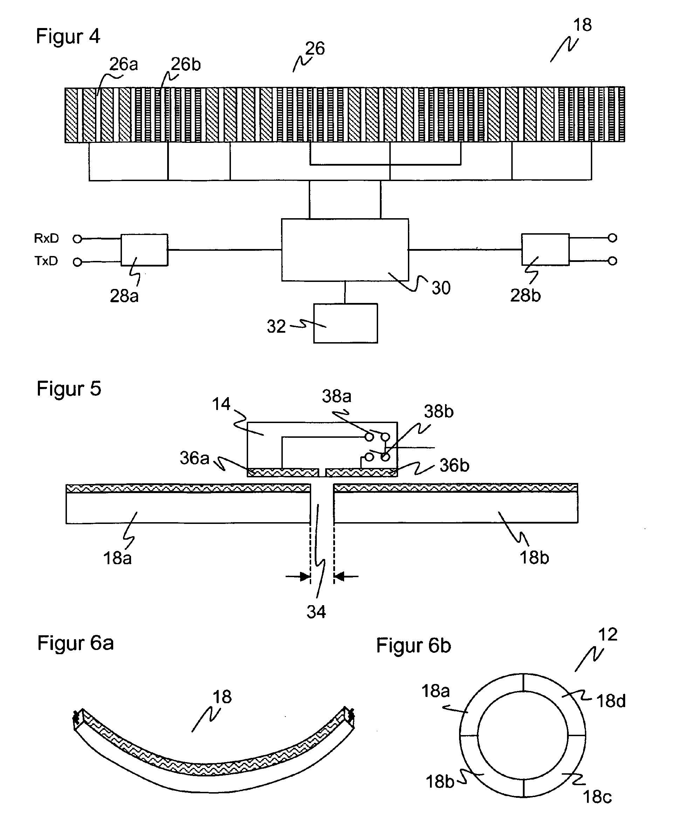

Figur 4 zeigt in einem vereinfachten Blockschaltbild eine beispielhafte Ausführungsform einer Codierung 26 und deren Verbindung mit der Steuerung 30. Die Codierung 26 weist hier eine jeweils nur symbolisch dargestellte Grobcodierung 26a und Feincodierung 26b auf. Mit der Grobcodierung 26a wird anfänglich beim Einschalten schnell eine Position des Lesekopfes 14 gefunden, die eigentlichen Messwerte im weiteren Betrieb werden mit der Feincodierung 26b ermittelt. Die Steuerungseinheit 30 ist durch eine entsprechende Vielzahl von Verbindungen in der Lage, Teilbereiche der Codierung 26 zu aktivieren und somit die Position eines aktiven oder passiven Lesekopfes 14 über der Codierung 26 zu bestimmen. Alternativ ist möglich, eine passive Absolutcodierung 26 zu verwenden, deren Mächtigkeit das Teilstück 18, das größtmögliche Teilstück 18a-c oder sogar mehrere Teilstücke 18a-c umfasst, und diese mit einem aktiven Lesekopf 14 auszuwerten.

Eine derart ermittelte Position wird über die Schnittstellen 28a-b ausgegeben, oder es werden Positionen oder andere Informationen entlang der sequentiellen Anordnung der mehreren Teilstücke 18a-c der Maßverkörperung 12 empfangen und weitergegeben. Die Schnittstellen 28a-b können weitere Anschlüsse, etwa für Masse, für einen Takt oder eine Versorgungsleitung umfassen.

Figur 5 erläutert in einer vereinfachten Schnittdarstellung, wie die unvermeidliche und in ihrer Ausdehnung aufgrund von Toleranzen unterschiedliche breite Lücke an einem Übergang 34 zwischen zwei Teilstücken 18a-b ausgemessen werden kann. Dazu weist der Lesekopf 14 zwei Teilzonen 36a-b auf, die mit der Codierung in Wechselwirkung treten können, sowie zwei Schalter 38a-b, mit denen beide oder selektiv nur jeweils eine Teilzone 36a-b des Lesekopfes 14 aktivierbar sind.

Der Übergang 34 wird ausgemessen, wenn der Lesekopf 14 zwischen den zugehörigen Teilstücken 18a-b angeordnet ist, idealerweise in etwa hälftig. Dazu wird sequentiell mittels der ersten Teilzone 36a die Position bezüglich des ersten Teilstücks 18a und mittels der zweiten Teilzone 36b die Position bezüglich des zweiten Teilstücks 18b gemessen. Eine Abweichung in diesen beiden Positionen entspricht gerade der Breite des Übergangs 34 beziehungsweise einem Fehler gegenüber einer erwarteten Breite dieses Übergangs 34. Diese Abweichung wird in dem Teilstück 18a, dem Teilstück 18b, dem Anfangsstück 20 und/oder der Hauptsteuerung 24 zur Berücksichtigung im weiteren Betrieb gespeichert.

Zwei Teilzonen 36a-b sind nur bei einem aktiven Lesekopf 14 sinnvoll, sowohl mit aktiven wie mit passiven Leseköpfen ist alternativ denkbar, analog zu dem eben beschriebenen Vorgehen nun mit nur einer gemeinsamen Zone zuerst mit einem von dem einen Teilstück 18a und dann mit einem von dem zweiten Teilstück 18b ausgehenden lokalen Feld die Position zu bestimmen.

Der Lesekopf 14 ist breit genug, um in dem Übergang 34 Messungen bezüglich beider Teilstücke 18a-b zuzulassen. Insbesondere kann der Lesekopf 14 sogar etwas breiter sein als eines der Teilstück 18a-b oder als das größte verwendete Teilstück 18a-c, um diese Bedingung sicherzustellen.

Figur 6a zeigt eine alternative Formgebung eines Teilstücks 18, welches eine Krümmung aufweist. Damit können wie in Figur 6b dargestellt mehrere Teilstücke 18a-d zyklisch zu einem Kreis verbunden werden. Der ermittelte Weg entspricht dann einem Winkel im Bogenmaß, so dass die Messvorrichtung 10 auch als absoluter Drehgeber einsetzbar wird. Die Krümmung ist bei starren Gehäusen der Teilstücke 18a-d fest vorgegeben, so dass sich die Teilstücke 18a-d zu einem Kreis mit vorab bestimmtem Radius verbinden. Alternativ kann für das Gehäuse ein elastisches Material eingesetzt werden, beispielsweise ein Elastomer, so dass die Krümmung des Teilstücks mit der ohnehin flexiblen Leiterkarte der Codierungen 26 zumindest in gewissen Grenzen einstellbar wird. Dabei geht in der Regel eine Kalibrierung auf Mikrometer verloren beziehungsweise ist nicht möglich, aber bei geringeren Genauigkeitsansprüchen ist die Messvorrichtung 10 auch in dieser Weise einsetzbar. In analoger Weise sind auch andere gekrümmte, sowohl offene wie geschlossene Bahnen möglich.

Anhand der Figuren 7-10 soll nun erläutert werden, wie die Positionswerte innerhalb der einzelnen Teilstücke 18a-d zu einem absoluten Positionswert bezüglich der Maßverkörperung 12 verrechnet werden.

Figur 7 erläutert eine anfängliche Selbstkonfigurierung der Maßverkörperung 12. Ausgehend von dem Anfangsstück 20 wird jedes nachgeordnete Teilstück 18a-d aufgefordert, sich eine Adresse sowie einen Versatz gegenüber dem Anfangsstück zuzuweisen und in dem Speicher 32 abzulegen, beziehungsweise diese Informationen werden dem nachgeordneten Teilstück 18a-d von dem Anfangsstück 20 oder der Hauptsteuerung 16 vorgegeben. Das erste Teilstück 18a erhält somit die Nummer #1, und es weist gegenüber dem Anfang einen kumulierten Versatz von 0mm auf. Da ein weiteres Teilstück 18b angeschlossen ist, wird die Selbstkonfiguration bei diesem Teilstück 18b fortgesetzt, das die Nummer #2 sowie einen kumulierten Versatz von 64mm erhält, welcher die Summe aus dem kumulierten Versatz des vorgeordneten Teilstücks 18a und der Länge von 64mm des vorgeordneten Teilstücks 18a ist. Diese wird analog fortgesetzt bis zum letzten Teilstück 18d mit der Nummer #11 und einem kumulierten Versatz von 704mm. Damit ist die Selbstkonfiguration abgeschlossen, denn dem Teilstück 18d ist nur noch das Endstück 22 und damit kein weiteres Teilstück nachgeordnet. Sämtliche Längenangaben sind in den Figuren der besseren Übersichtlichkeit halber nur auf Millimeter genau angegeben, sie können in der Praxis drei oder mehr Nachkommastellen aufweisen.

Die Nummern #1 bis #11 können zugleich als Kommunikationsadressen dienen und sind rein beispielhaft zu verstehen. Wichtig ist nur, dass diese Nummern eindeutige Rückschlüsse auf die Position des zugehörigen Teilstücks 18a-d innerhalb der sequentiellen Anordnung der Teilstücke 18a-d zulassen. Es ist nicht zwingend erforderlich, den kumulierten Versatz in den Speichern 32 abzulegen, da dieser Versatz aus der Position jedes Teilstücks 18a-d innerhalb der Maßverkörperung 12 sowie den aus dem Typ der Teilstücke 18a-d bekannten Längen der Teilstücke 18a-d in den Steuerungseinheiten 32 oder der Hauptsteuerung 16 berechnet werden kann.

Mit Hilfe des Versatzes lässt sich die Position eines Lesekopfes 14 leicht auf die Maßverkörperung 12 beziehen. Misst beispielsweise das Teilstück 18c beziehungsweise dessen Steuerungseinheit 30 einen Lesekopf 14 bei 99mm bezüglich des Teilstücks 18c, so wird der zugehörige kumulierte Versatz des Teilstücks 18c von 128mm hinzuaddiert, um eine absolute Position von 99mm+128mm=227mm bezüglich des Anfangsstücks 20 der Maßverkörperung 12 zu erhalten.

Figur 8 erläutert eine Verschiebung des Nullpunktes, also des Bezugspunktes auf der Maßverkörperung 12. Dazu wird ein neuer Nullpunkt 40 vorgegeben, beispielsweise durch einen Kalibrierungsknopf an einem Lesekopf 14, der sich an dieser Position befindet. Daraufhin wird die Position des Lesekopfes 14 bestimmt, hier 100mm bezüglich des Teilstücks 18c und damit 100mm+128mm=228mm bezüglich des Anfangsstücks 20 der Maßverkörperung 12. Der kumulierte Versatz in allen Teilstücken 18a-d wird um diesen Wert von 228mm nach unten korrigiert, und damit ist der Nullpunkt verschoben.

Figur 9 illustriert die bereits anhand der Figur 5 beschriebene Lückenkompensation. Dargestellt ist ein Übergang 34a von 3mm Breite zwischen den Teilstücken 18a und 18b sowie ein Übergang 34b von 5mm Breite zwischen den Teilstücken 18b und 18c. Praktisch sind derart breite Übergänge mechanisch vermeidbar und betragen deutlich weniger als 1 mm, aber für das Funktionsprinzip soll der bisher verwendete Millimetermaßstab nicht verlassen werden.

Sobald der Lesekopf 14 von seinem Nullpunkt 40 den Übergang 34b erreicht, wird dessen Breite mit dem anhand Figur 5 erläuterten Verfahren gemessen. Der kumulierte Versatz in allen bezüglich des Nullpunktes 40 auf der gleichen Seite liegenden Teilstücken 18a-b wird um die Breite von 3mm dieses Übergangs 34a korrigiert. Ganz entsprechend wird an jedem Übergang 34a-b verfahren.

Durch eine anfängliche Kalibrierungsfahrt vom Nullpunkt 40 aus an alle Übergänge 34a-b lässt sich die Maßverkörperung vorab vollständig kalibrieren. Sofern nur ein Lesekopf 14 eingesetzt wird, ist die Kalibrierung aber auch dynamisch möglich, denn der Lesekopf 14 erreicht einen Messort nur auf dem Weg über alle relevanten Übergänge 34a-b zwischen Nullpunkt 40 und dem Messort. Alternativ ist auch möglich, zunächst Erwartungswerte für die Breiten der Übergänge 34a-b anzunehmen und diese dann jeweils zu korrigieren, wenn ein Lesekopf 14 den Übergang 34a-b erreicht. Die Maßverkörperung 12 ist auch in diesem Fall erst vollständig kalibriert, wenn sämtliche Übergänge 34a-b berücksichtigt werden konnten, und liefert vorher nur mit einem Fehler behaftete Messwerte, die aber in vielen Anwendungen bereits genügen können.

Figur 10 erläutert das Auffinden der Leseköpfe beim Einschalten mittels Positionsmultiplexing. Dazu werden sequentiell alle Teilstücke 18a-d aktiviert, die ihrerseits sequentiell lokale Felder 42 an allen Positionen erzeugen. Die in Figur 10 gezeigten lokalen Felder 42 sind demnach nicht gleichzeitig, sondern nacheinander aktiv. An der Position eines Lesekopfes 14 wird dieser durch seine Wechselwirkung mit dem lokalen Feld 42 erkannt. Sofern nur ein Lesekopf 14 vorhanden ist, kann das Verfahren an dieser Stelle abgebrochen werden, ansonsten wird es fortgesetzt, bis alle Leseköpfe 14 gefunden oder alle Positionen geprüft sind. Im weiteren Betrieb ist die Position der Leseköpfe 14 bekannt, so dass nur in deren Umgebung lokale Felder 42 erzeugt werden, um Verschiebungen der Leseköpfe 42 zu verfolgen.

## Patentansprüche

1. Messvorrichtung (10) zur Absolutwertbestimmung von Längen oder Winkeln mit mindestens einem Lesekopf (14) und einer Maßverkörperung (12), die mindestens ein Teilstück (18) mit einem Anschluss (28) für ein anderes Teilstück (18) in einer sequentiellen Anordnung aufweist, wobei das Teilstück (18) eine Steuerungseinheit (30) zur aktiven Bestimmung der Lage des Lesekopfes (14) über dem Teilstück (18) sowie ein Speicherelement (32) aufweist, in dem eine eigene Positionsinformation des Teilstücks (18) innerhalb der Maßverkörperung (12) ablegbar ist,
wobei
der Lesekopf (14) dafür ausgebildet ist, an einem Übergang (34) zwischen zwei Teilstücken (18) je einen Messwert beider Teilstücke (18c) zu erzeugen, **dadurch gekennzeichnet dass** die Messvorrichtung (10) Mittel zum Ableiten eines Korrekturmaßes für den Übergang (34) aus der Differenz der beiden Messwerte aufweist.

2. Messvorrichtung (10) nach Anspruch 1,
wobei die Maßverkörperung (12) selbstkonfigurierend ist, indem die Steuerungseinheit (30) dafür ausgebildet ist, die eigene Positionsinformation von einem angeschlossenen anderen Teilstück (18) zu empfangen oder aus einer Positionsinformation des angeschlossenen anderen Teilstücks (18) abzuleiten.

3. Messvorrichtung (10) nach einem der vorhergehenden Ansprüche,
wobei der Lesekopf (14) aktiv ist und ein Feld erzeugt, welches mit einem von der Maßverkörperung (12) erzeugten Feld (42) in Wechselwirkung tritt, oder wobei der Lesekopf (14) passiv ist und ein von der Maßverkörperung (12) erzeugtes Feld (42) modifiziert oder zu der Maßverkörperung (12) reflektiert.

4. Messvorrichtung (10) nach einem der vorhergehenden Ansprüche,
wobei die Steuerungseinheit (30) dafür ausgebildet ist, an jeder Position des Teilstücks (18) ein Feld (42) zu erzeugen, um auszuwerten, ob und an welcher Position sich ein Lesekopf (14) über dem Teilstück (18) befindet, wobei das Ergebnis der Auswertung über den Anschluss (28) ausgebbar ist.

5. Messvorrichtung (10) nach einem der vorhergehenden Ansprüche,
wobei in dem Speicherelement (32) eine Abweichung der eigenen Positionsmessung des Teilstücks (18) von einer Referenz abgespeichert ist, um das Teilstück (18) zu kalibrieren.

6. Messvorrichtung (10) nach einem der vorhergehenden Ansprüche,
wobei die Maßverkörperung (12) für eine Winkelmessung gekrümmte Teilstücke (18) aufweist, und wobei insbesondere die Teilstücke (18) zu unterschiedlichen Krümmungsradien verbiegbar sind.

7. Messvorrichtung (10) nach einem der vorhergehenden Ansprüche,
wobei eine mit der Maßverkörperung (12) elektrisch verbundene Hauptsteuerung (16) vorgesehen ist, welche mit dem Anfang und dem Ende der sequentiellen Anordnung, insbesondere auch dem aktiv ausgebildeten Lesekopf (14) verbunden sind.

8. Messvorrichtung (10) nach einem der vorhergehenden Ansprüche,
wobei ein Anfangsstück (20) am Anfang und ein Endstück (22) am Ende der sequentiellen Anordnung vorgesehen ist, und wobei insbesondere die Hauptsteuerung (16) zumindest teilweise in dem Anfangsstück (20) oder dem Endstück (22) integriert ist.

9. Messvorrichtung (10) nach einem der vorhergehenden Ansprüche,
wobei Maßverkörperung (12) und Lesekopf (14) für eine induktive, kapazitive oder magnetische Messung von Längen oder Winkeln ausgebildet sind.

10. Verfahren zur Absolutwertbestimmung von Längen oder Winkeln mit mindestens einem Lesekopf (14) und einer Maßverkörperung (12), die von einer sequentiellen Anordnung von Teilstücken (18) gebildet wird, wobei ein Teilstück (18) aktiv die Lage des Lesekopfes (14) über dem Teilstück (18) misst, die Position des Teilstücks (18) innerhalb der sequentiellen Anordnung anhand einer in dem Teilstück (18) gespeicherten Positionsinformation ermittelt wird und ein Absolutwert der Länge oder des Winkels aus der Lage innerhalb des Teilstücks (18) und der Position des Teilstücks (18) in der sequentiellen Anordnung ermittelt wird,
wobei dann, wenn sich der Lesekopf (14) an einem Übergang (34) zwischen zwei Teilstücken (18) befindet, je ein Messwert beider Teilstücke (18) erzeugt wird, **dadurch gekennzeichnet, dass** aus der Differenz der beiden Messwerte ein Korrekturmaß für den Über-gang (34) abgeleitet wird.

11. Verfahren nach Anspruch 10,
wobei sich die Maßverkörperung (12) selbst konfiguriert, indem sequentiell jedes Teilstück (18), beginnend mit einem ersten Teilstück (18), sich in einem Selbstkonfigurationsmodus eine Positionsinformation zuweist oder eine Positionsinformation zugewiesen bekommt und anschließend ein nachgeordnetes Teilstück (18) in den Selbstkonfigurationsmodus versetzt.

12. Verfahren nach Anspruch 10 oder 11,
wobei die Positionsinformation eines der beiden Teilstücke (18) um das Korrekturmaß kompensiert wird.

13. Verfahren nach einem der Ansprüche 10 bis 12,
wobei die Maßverkörperung (12) kalibriert wird, indem jedes Teilstück (18) in sich Abweichungen zu einem Referenzmaß speichert, ein Nullpunkt (40) für die Maßverkörperung (12), insbesondere bei einem der Leseköpfe (14), festgelegt wird und Abstände an einem Übergang (34) wischen zwei Teilstücken (18) bei der Bewegung des Lesekopfes (14) über den Übergang (34) auf den Nullpunkt (40) hin korrigiert werden.

14. Verfahren nach einem der Ansprüche 10 bis 13,
wobei zu einer anfänglichen Bestimmung der Position von Leseköpfen (14) jeder Ort der Maßverkörperung (12) durch sequentielle Erzeugung eines lokalen Feldes (42) in den Teilstücken (18) mittels Positionsmultiplexing darauf überprüft wird, ob ein Lesekopf (14) vorhanden ist, und wobei anschließend im Betrieb jeweils nur in der Umgebung eines Lesekopfes (14) ein lokales Feld (42) erzeugt wird.

## Claims

1. A measurement apparatus (10) for the absolute value determination of lengths or of angles, said apparatus having at least one reading head (14) and a physical scale (12) which has at least a partial section (18) with a connection (28) for another partial section (18) in a sequential arrangement, wherein the partial section (18) includes a control unit (30) for the active determination of the position of the reading head (14) proximal to the partial section (18) as well as a storage element (32) in which an own position information of the partial section (18) within the physical scale (12) can be stored, wherein the reading head (14) is configured to generate a respective measurement value for both partial sections (18c) at a transition (34) between two partial sections (18),
**characterized in that**
the measurement apparatus (10) comprises means for deriving a correction value for the transition (34) from the difference of the two measurement values.

2. A measurement apparatus (10) in accordance with claim 1,
wherein the physical scale (12) is self-configuring in that the control unit (30) is adapted to receive its own position information from a connected other partial section (18) or to derive its own position information from a position information of a connected other partial section (18).

3. A measurement apparatus (10) in accordance with any of the preceding claims, wherein the reading head (14) is active and generates a field which interacts with a field (42) generated by the physical scale (12), or wherein the reading head (14) is passive and modifies a field (42) generated by the physical scale (12) or reflects a field (42) to the physical scale (12).

4. A measurement apparatus (10) in accordance with any of the preceding claims, wherein the control unit (30) is configured to generate a field (42) at each position of the partial section (18) to evaluate whether a reading head (14) is present proximal to the partial (18) section and at which position the reading head (14) is proximal to the partial section (18), wherein the result of the evaluation can be output via the connection (28).

5. A measurement apparatus (10) in accordance with any of the preceding claims, wherein a deviation of its own position measurement of the partial section (18) from a reference is stored in the storage element (32) to calibrate the partial section (18).

6. A measurement apparatus (10) in accordance with any of the preceding claims, wherein the physical scale (12) has curved partial sections (18) for an angle measurement, and wherein in particular the partial sections (18) can be bent to different radii of curvature.

7. A measurement apparatus (10) in accordance with any of the preceding claims, wherein a main control (16) is provided which is electrically connected to the physical scale (12) and is connected to the beginning and the end of the sequential arrangement, in particular is also connected to the actively configured reading head (14).

8. A measurement apparatus (10) in accordance with any of the preceding claims, wherein a starting section (20) is provided at the beginning of the sequential arrangement and an end section (22) is provided at the end of the sequential arrangement, and wherein in particular the main control (16) is at least partially integrated into the starting section (20) or into the end section (22).

9. A measurement apparatus (10) in accordance with any of the preceding claims, wherein the physical scale (12) and the reading head (14) are configured for an inductive measurement, a capacitive measurement or a magnetic measurement of lengths or of angles.

10. A method for the absolute value determination of lengths or of angles having at least one reading head (14) and a physical scale (12) which is formed from a sequential arrangement of partial sections (18), wherein a partial section (18) actively measures the position of the reading head (14) proximal to the partial section (18), wherein the position of the partial section (18) within the sequential arrangement is determined by means of a position information stored in the partial section (18) and wherein an absolute value of the length or the angle is determined from the position within the partial section (18) and the position of the partial section (18) within the sequential arrangement, wherein a respective measurement value for both partial sections (18) is generated when the reading head (14) is positioned at a transition (34) between two partial sections (18),
**characterized in that**
a correction value for the transition (34) is derived from the difference between the two measurement values.

11. A method in accordance with claim 10,
wherein the physical scale (12) is self-configured in that, in sequence, each partial section (18) starting with a first partial section assigns itself a position information in a self-configuration mode or is assigned a position information and subsequently places a partial section (18) arranged downstream thereof into the self-configuration mode.

12. A method in accordance with claim 10 or 11,
wherein the position information of one of the two partial sections (18) is compensated by the correction value.

13. A method in accordance with any of claims 10 to 12,
wherein the physical scale (12) is calibrated in that each partial section (18) stores deviations to a reference value, wherein a zero point (40) for the physical scale (12) is determined, in particular at one of the reading heads (14), and distances at a transition (34) between two partial sections (18) are corrected to the zero point (40) on movement of the reading head (14) across the transition (34).

14. A method in accordance with any of claims 10 to 13,
wherein for an initial determination of the position of reading heads (14) each location of the physical scale (12) is checked through the generation of a local field (42) in the partial sections (18) by means of position multiplexing to see whether a reading head (14) is present and wherein subsequently in operation only a local field (42) is respectively generated in the vicinity of a reading head (14).

## Revendications

1. Dispositif de mesure (10) pour la détermination de la valeur absolue de longueurs ou d'angles, le dispositif comprenant au moins une tête de lecture (14) et un élément de répresentation dimensionelle (12) qui comprend au moins une section partielle (18) avec une connexion (28) pour une autre section partielle (18) dans un arrangement séquentiel, et en ce que la section partielle (18) comprend une unité de contrôle (30) pour la détermination active de la position de la tête de lecture (14) au-dessus de la section partielle (18 ) comprenant ainsi un élément de stockage (32) dans lequel une propre information de la position de la section partielle (18) dans l'élément de répresentation dimensionelle (12) peut être stocké, dont la tête de lecture (14) est configurée pour générer à une transition (34) entre deux sections partielles (18) une valeur de mesure pour les deux sections partielles (18c) respectivement, **caractérisé en ce que** le dispositif de mesure (10) comprend des moyens pour dériver une valeur de correction pour la transition (34) de la différence des deux valeurs de mesure.

2. Dispositif de mesure (10) selon la revendication 1, **caractérisé en ce que** l'élément de répresentation dimensionelle (12) est auto-configurant **en ce que** l'unité de contrôle (30) est adaptée pour recevoir son information de la position d'une autre section partielle (18) connectée ou de dériver son information de la position de l'information de la position de l'autre section partielle (18) connectée.

3. Dispositif de mesure (10) selon l'une des revendications précédentes, **caractérisé en ce que** la tête de lecture (14) est active et génère un champ qui interagit avec un champ (42) généré par l'élément de répresentation dimensionelle (12), ou **en ce que** la tête de lecture (14) est passive et modifie un champ (42) généré par l'élément de répresentation dimensionelle (12) ou reflète le champ (42) à l'élément de répresentation dimensionelle (12).

4. Dispositif de mesure (10) selon l'une des revendications précédentes, **caractérisé en ce que** l'unité de contrôle (30) est configurée pour générer un champ (42) à chaque position de la section partielle (18) afin d'évaluer si et à quelle position de la section partielle (18) une tête de lecture (14) est présente au-dessus de la section partielle (18), et le résultat de l'évaluation peut être émis via la connexion (28).

5. Dispositif de mesure (10) selon l'une des revendications précédentes, **caractérisé en ce qu'**une déviation de la propre mesure de la position de la section partielle (18) d'une référence est stockée dans l'élément de stockage (32) pour calibrer la section partielle (18).

6. Dispositif de mesure (10) selon l'une des revendications précédentes, **caractérisé en ce que** l'élément de répresentation dimensionelle (12) comprend des sections partielles courbées (18) pour une mesure d'angle, et **en ce qu'**en particulier les sections partielles (18) peuvent être déformées aux rayons de courbure différents.

7. Dispositif de mesure (10) selon l'une des revendications précédentes, **caractérisé en ce qu'**une unité de contrôle principale (16) est fournie, qui est reliée électriquement à l'élément de répresentation dimensionelle (12) et est reliée au début et à la fin de l'arrangement séquentiel, et en particulier, est également reliée à la tête de lecture (14) configurée activement.

8. Dispositif de mesure (10) selon l'une des revendications précédentes, **caractérisé en ce qu'**une section initiale (20) est fournie au début de l'arrangement séquentiel et une section finale (22) est fournie à la fin de l'arrangement séquentiel, et **en ce qu'**en particulier l'unité contrôle principale (16) est au moins partiellement intégrée dans la section initiale (20) ou dans la section finale (22).

9. Dispositif de mesure (10) selon l'une des revendications précédentes, **caractérisé en ce que** l'élément de répresentation dimension elle (12) et la tête de lecture (14) sont configurés pour une mesure inductive, capacitive ou magnétique de longueurs ou d'angles.

10. Procédé pour la détermination de la valeur absolue de longueurs ou d'angles avec au moins une tête de lecture (14) et un élément de répresentation dimensionelle (12) qui est formé d'un arrangement séquentiel des sections partielles (18), dans laquelle une section partielle (18) mesure activement la position de la tête de lecture (14) au-dessus de la section partielle (18), la position de section partielle (18) dans l'arrangement séquentiel est déterminée au moyen d'une information de position stockée dans la section partielle (18) et une valeur absolue de la longueur ou l'angle est déterminée par la position dans la section partielle (18) et de la position de la section partielle (18) dans l'arrangement séquentielle, dont une valeur de mesure respective des deux sections partielles (18) est générée lorsque la tête de lecture (14) est positionnée à une transition (34) entre deux sections partielles (18), **caractérisé en ce qu'**une valeur de correction pour la transition (34) est dérivée de la différence entre les deux valeurs de mesure.

11. Procédé selon la revendication 10, **caractérisé en ce que** l'élément de répresentation dimensionelle (12) est auto-configuré **en ce que** chaque section partielle (18) en commençant par une première section partielle s'assigne une information de position dans un mode d'auto-configuration ou est assignée une information de position et par la suite transforme une section partielle (18) suivante dans le mode d'auto-configuration.

12. Procédé selon la revendication 10 ou 11, **caractérisé en ce que** l'information de position de l'une des deux sections partielles (18) est compensées par la valeur de correction.

13. Procédé selon l'une des revendications 10 à 12, **caractérisé en ce que** l'élément de répresentation dimensionelle (12) est calibré **en ce que** chaque section partielle (18) s'enregistre des deviations à une valeur de référence, un point zéro (40) pour l'élément de répresentation dimensionelle (12) est déterminé, en particulier à l'une des têtes de lecture (14), et des distances à un transition (34) entre deux sections partielles (18) sont corrigées au point zéro (40) au mouvement de la tête de lecture (14) à travers de la transition (34).

14. Procédé selon l'une des revendications 10 à 13, **caractérisé en ce que** pour une détermination initiale des positions des têtes de lecture (14) chaque location de l'élément de répresentation dimensionelle (12) est vérifiée si une tête de lecture (14) est présente par la génération séquentielle d'un champ local (42) dans les sections partielles (18) par le multiplexage de la position et **en ce qu'**ensuite en operation un champ local (42) est respectivement généré seulement à l'entourage d'une tête de lecture (14).
